# EUROPEAN PATENT SPECIFICATION

(11) **EP 3 014 981 B1**
(45) Date of publication and mention of the grant of the patent: **25.10.2017**
(21) Application number: 14817923.7
(22) Date of filing: 23.01.2014
(51) Int. Cl.: A01G 9/02

(54) **LIGHT GREEN WALL STRUCTURE**
LEICHTE STRUKTUR ZUR VERTIKALEN BEGRÜNUNG
STRUCTURE LÉGÈRE DE MUR VÉGÉTAL

(30) Priority: 27.06.2013 TW 102212066
(43) Date of publication of application: 04.05.2016
(73) Proprietor: Ou, Chien-Tsung, Pingtung County 90544 (TW)
(72) Inventor: Ou, Chien-Tsung, Pingtung County 90544 (TW)
(74) Representative: Gee, Steven William
(86) International application number: PCT/IB2014/058481
(87) International publication number: WO 2014/207580

(56) References cited:
- CN-U- 202 722 104
- CN-U- 203 289 946
- CN-Y- 2 448 090
- CN-Y- 2 448 090
- TW-U- M 464 997
- US-A- 2 316 892
- US-A- 4 380 136
- US-A- 4 380 136
- US-A- 4 896 456
- US-A1- 2004 222 178
- US-A1- 2011 016 784

## Description

### BACKGROUND OF THE INVENTION

### 1. Field of the Invention

The present invention generally relates to a light green wall structure, and more specifically to a light green wall structure employing hooks of lateral support members fixed with longitudinal support members to engage with meshes of support containers and configuring the support containers to horizontally support plant containers for a planting function.

### 2. The Prior Arts

In general, plants provide a function of absorbing carbon dioxide in the air to generate fresh oxygen for creatures, and effectively reducing environmental temperature by shielding sunlight. Thus, appropriate planting is one of the best solutions to achieve energy saving, carbon reduction and environmental protection, particularly without producing waste. Additionally, even the plants around buildings such as trees or ivy can reduce indoor temperature.

However, land source is quite precious and very limited in current cities such that it is not practical to grow a great deal of plants. Many planting companies have thus developed a green wall with a vertical surface for vertically planting so as to increase utility. In particular, the green wall can be used as a normal wall in outdoor or indoor for greening the environment. In the prior arts, the green wall is constructed by iron or steel rods to form a vertical planting surface with recessions or bowls for accommodating and growing the target plants. However, the above green wall needs to fix to the solid wall and can not be used stand-alone, and no chance for recycling and reuse is another drawback. As a result, the overall cost of the traditional green wall is considerably high and a great deal of materials for construction is needed, leading to low industrial utility.

Therefore, it is greatly needed to provide a new light green wall structure employing hooks of lateral support members fixed with longitudinal support members through fixing elements to engage with meshes of support containers formed of expanded metal sheets, and further configuring the support containers to horizontally support plant containers for a planting function, thereby overcoming the above problems in the prior arts.

CN 2 448 090 Y and US 4 380 136 A describe stand-alone systems for vertical planting, with support containers fixed with hooks.

US 4 896 456 A describes a similar system but fitting freely and removably on a wall or fence.

US 2 316 892 A and US 2004/222178 A1 describe rack systems, for items storage, with removable trays.

### SUMMARY OF THE INVENTION

The primary objective of the present invention is to provide a light green wall structure, comprising lateral support members, longitudinal support members and support containers. The lateral and longitudinal support members are engaged with and fixed together through fixing elements to construct a vertical skeleton. The longitudinal support member has openings, and each has a notch toward the edge of the longitudinal support member to form a hook. The support container has a first lateral surface, a longitudinal surface, a second surface and an oblique surface, which are sequentially adjacent and formed by bending. Specifically, the first and second lateral surfaces are bent in two opposite bending directions, and the oblique surface is obliquely upward and outward. The first lateral surface of the support container is provided with meshes for accommodating the hooks so as to engage with the longitudinal support members.

In particular, the second lateral surface is used to support plant containers for accommodating plants and soil, and the present invention thus provides a light green wall and a planting function. In addition, the support containers are directly hooked with the longitudinal support members without other fixing members. As a result, the meshes of the support container are easily detached from the hooks of the longitudinal support members by simply hauling up, thereby simplifying maintenance and improving application convenience and flexibility.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a perspective view showing a light green wall structure according to one embodiment of the present invention;
FIG. 2 is a view showing the lateral support member of the present invention;
FIG. 3 is a view showing a lateral support member according to another embodiment of the present invention;
FIG. 4 is a view showing the detailed engagement of the lateral and longitudinal support member of the present invention; and
FIG. 5 is a view showing the detailed engagement of the lateral and longitudinal support member of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

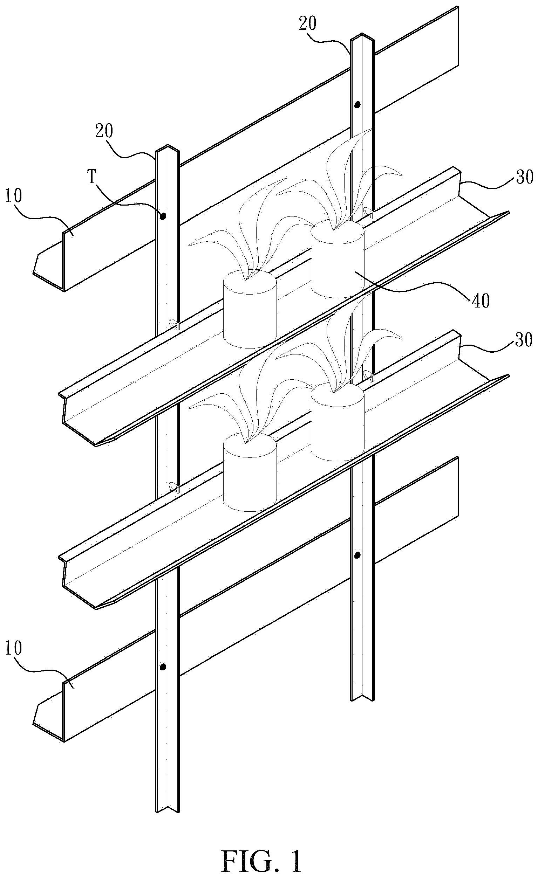

Please refer to FIG. 1 illustrating the light green wall structure according to one embodiment of the present invention. As shown in FIG. 1, the light green wall structure of the present invention generally comprises lateral support members 10, longitudinal support members 20 and support containers 30. The lateral support members 10 and the longitudinal support members 20 are combined with fixing elements T to construct a vertical skeleton. Each support container 30 is formed of a metal net sheet having meshes, and are engaged with the respective longitudinal support members 20 for planting. As a result, the present invention provides a green wall for a planting function. Specifically, the fixing element T is implemented by a screw.

It should be noted that FIG. 1 only shows two lateral support members 10, two longitudinal support members 20 and two support containers 30 for clearly explaining the features of the present invention, and is not intended to limit the scope of the present invention. Thus, the light green wall structure of the present invention is also substantially configured to comprise more than two lateral support members 10, two longitudinal support members 20 and two support containers 30.

The lateral support member 10 is an L shaped metal rod provided with a plurality of through holes. Preferably, the lateral support member 10 is formed of angle iron or steel, or alternatively, galvanized angle iron or steel.

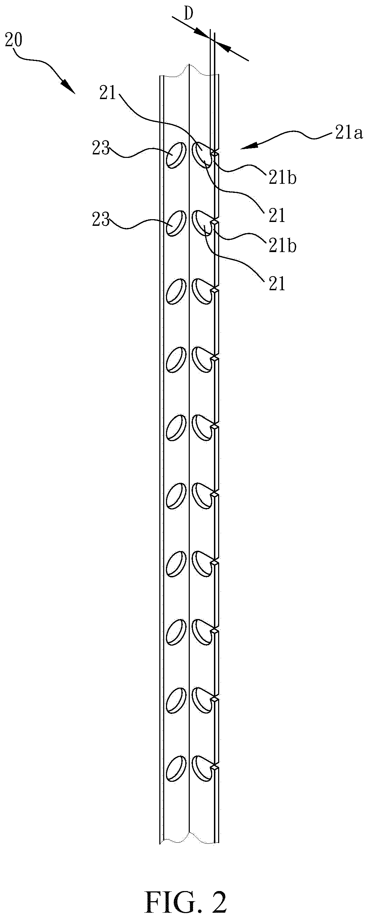

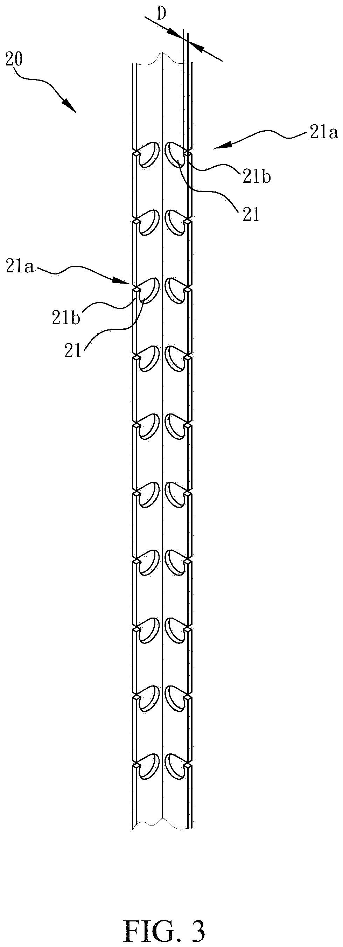

Refer to FIG. 2. The longitudinal support member 20 is an L shaped metal rod formed of angle iron or steel, or galvanized angle iron or steel. Specifically, a plurality of openings 21 are configured on at least one surface of the longitudinal support member 20, and a plurality of through holes 23 are provided another surface of the longitudinal support member 20. In particular, each opening 21 has a notch 21a toward the edge so as to form a hook 21b upward and outward with a width D. The through hole 23 is configured for the fixing element T shown in FIG. 1 to insert. In another embodiment of the present invention shown in FIG. 3, the longitudinal support member 20 only comprises the openings 21 without the through holes.

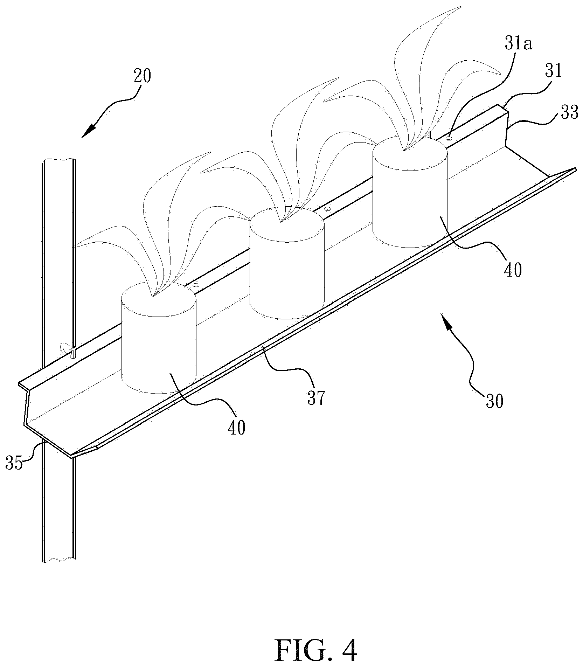

Further refer to FIG. 4 for more detailed information about the engagement of the lateral support member 10 and longitudinal support member 20 of the present invention. As shown in FIG. 4, the support container 30 has a first lateral surface 31, a longitudinal surface 33, a second lateral surface 35 and an oblique surface 37, which are sequentially adjacent and formed by bending. The first lateral surface 31 is configured in a horizontal direction, the longitudinal surface 33 is in a vertical direction, the second lateral surface 35 is horizontally configured, and the oblique surface 37 is obliquely upward and outward. More specifically, the first lateral surface 31 and the second lateral surface 35 are bent in two opposite bending directions. For example, FIG. 4 shows that with respect to the longitudinal surface 33, the first lateral surface 31 is bent toward the left hand side, the second lateral surface 35 is bent toward the right hand side, and the oblique surface 37 is obliquely bent outward and upward. The second lateral surface 35 is used to support at least one plant container 40 for planting. For instance, the plant container 40 is a pot formed of non-woven fabric, plastic, metal or ceramic for accommodating mellow soil or nutrient liquid, and the plants.

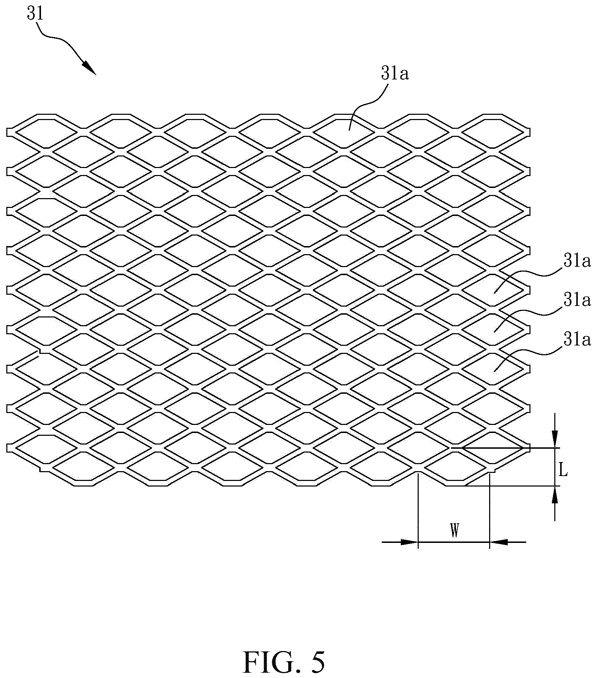

As shown in FIG. 5, it is preferred that the support container 30 is formed of the expanded metal sheet having meshes 31a. The mesh 31a has a width W and a longitudinal length L. In particular, the size of the mesh 31a of the support container 30 is configured to fit the width D of the hook 21b of the longitudinal support member 20 (as shown in FIGs. 2 and 3) such that the hook 21b hooks and engages the mesh 31a. Specifically, the width W and/or the longitudinal length L of the mesh 31a are greater than the width D of the hook 21b so as to fix the support container 30 to the longitudinal support member 20. As a result, the support containers 30 are configured in parallel and horizontally engaged with the longitudinal support members 20.

It should be noted that the sizes of the hook 21b and the meshes 31a shown in FIG. 4 are only intended for schematic illustration of engagement, instead of exactly being depicted according to the actual dimension, as long as the hook 21b fits the meshes 31a so as to hook and fix the support container 30 to the longitudinal support member 20.

From the above mention, one of the primary aspects of the present invention is that the second lateral surface of the support container can support the plant containers to provide the planting function. In addition, the meshes of the support container provide with good water permeability such that surplus water in the water-permeable plant container easily penetrates the support container and further flows down to the next support container below. As a result, the plant containers placed on the second lateral surface of this next support container receive sufficient water for planting, and the second lateral surface will not accumulate water to avoid insects growing. Further, the environment is greatly improved and water resource is effectively utilized with increase in economy effect.

Another aspect of the present invention is that the hooks of the longitudinal support member engage with the meshes of the first lateral surface of the support container so as to fix the support container to the longitudinal support member, and particularly, no fixing members are used for detachable engagement. In other words, the support container can be easily hauled up to be detached from the longitudinal support member because the hooks are released from the meshes. Therefore, the longitudinal support members and the support containers of the present invention are easily assembled and dissembled, thereby providing advantages of simple maintenance and improving application convenience and flexibility.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A light green wall structure, comprising:
a plurality of lateral support members (10) configured in a lateral direction, each lateral support member being an L shaped metal rod with a plurality of through holes;
a plurality of longitudinal support members (20) configured in a longitudinal direction, each longitudinal support member being an L shaped metal rod with a plurality of openings (21) on at least one surface, the opening having a notch (21a) toward to an edge of the longitudinal support member to form a upward hook (21b), the upward hook having a width, the lateral and longitudinal support members being combined with fixing elements provided through the respective through holes and the openings to construct a vertical skeleton; and
a plurality of support containers (30), each formed of a metal net sheet having meshes, wherein the support container has a first lateral surface (31), a longitudinal surface (33), a second lateral surface (35) and an oblique surface (37) sequentially adjacent and formed by bending, the oblique surface is obliquely upward and outward, the first and second lateral surfaces are bent in two opposite bending directions, the second lateral surface is used to support at least one plant container (40), the meshes are provided on the first lateral surface for accommodating the hooks such that the support containers are horizontally and detachably engaged with the longitudinal support members.

2. The light green wall structure as claimed in claim 1, wherein the support container is formed of an expanded metal sheet having meshes, the mesh of the support container has a lateral length and a longitudinal length, the lateral length and/or the longitudinal length is greater than a width of the hook of the longitudinal support member.

3. The light green wall structure as claimed in claim 1, wherein the fixing element is implemented by a screw.

## Patentansprüche

1. Leichte Fassadenbegrünungsstruktur, umfassend:
eine Mehrzahl von Querträgerelementen (10), die in einer Querrichtung konfiguriert sind, wobei jedes Querträgerelement ein L-förmiger Metallstab mit einer Mehrzahl von Durchgangslöchern ist;
eine Mehrzahl von Längsträgerelementen (20), die in einer Längsrichtung konfiguriert sind, wobei jedes Längsträgerelement ein L-förmiger Metallstab mit einer Mehrzahl von Öffnungen (21) auf mindestens einer Oberfläche ist, wobei die Öffnung eine Kerbe (21a) in Richtung eines Randes des Längsträgerelements aufweist, um einen nach oben gerichteten Haken (21b) zu bilden, wobei der nach oben gerichtete Haken eine Breite aufweist, die Quer- und Längsträgerelemente mit Fixierungselementen kombiniert werden, die durch die jeweiligen Durchgangslöcher und die Öffnungen hindurch bereitgestellt werden, um ein vertikales Skelett zu bilden, und
eine Mehrzahl von Trägerbehältern (30), die jeweils aus einem Metallnetzblech gebildet sind, das Maschen aufweist,
wobei der Trägerbehälter eine erste Querfläche (31), eine Längsfläche (33), eine zweite Querfläche (35) und einer schräge Fläche (37) aufweist, die nacheinander aneinander angrenzen und durch Biegen gebildet sind, wobei die schräge Fläche nach oben und nach außen abgeschrägt ist, die ersten und zweiten Querflächen in zwei entgegengesetzte Biegerichtungen gebogen sind, die zweite Querfläche verwendet wird, um mindestens einen Pflanzenbehälter (40) zu tragen, die Maschen auf der ersten Querfläche vorgesehen sind, um die Haken aufzunehmen, so dass die Trägerbehälter horizontal und abnehmbar in Eingriff mit den Längsträgerelementen stehen.

2. Leichte Fassadenbegrünungsstruktur gemäß Anspruch 1, wobei der Trägerbehälter aus einem Streckmetallblech gebildet ist, das Maschen aufweist, die Masche des Trägerbehälters eine Querlänge und eine Längslänge aufweist, wobei die Querlänge und/oder die Längslänge größer ist als eine Breite des Hakens des Längsträgerelements.

3. Leichte Fassadenbegrünungsstruktur gemäß Anspruch 1, wobei das Fixierungselement durch eine Schraube implementiert ist.

## Revendications

1. Une structure légère de mur végétal, comprenant :
une pluralité d'éléments de support latéraux (10) configurés dans une direction latérale, chaque élément de support latéral étant une tige métallique en forme de L avec une pluralité de trous traversants ;
une pluralité d'éléments de support longitudinaux (20) configurés dans une direction longitudinale, chaque élément de support longitudinal étant une tige métallique en forme de L avec une pluralité d'ouvertures (21) sur au moins une surface, l'ouverture ayant une encoche (21a) vers un bord de l'élément de support longitudinal pour former un crochet vers le haut (21b), le crochet vers le haut ayant une largeur, les éléments de support latéraux et longitudinaux étant combinés à des éléments de fixation fournis à travers les trous traversants respectifs et les ouvertures afin de construire un squelette vertical ; et
une pluralité de contenants de support (30), chacun formé d'une feuille de filet de métal ayant des mailles,
où le contenant de support a une première surface latérale (31), une surface longitudinale (33), une deuxième surface latérale (35) et une surface oblique (37) séquentiellement adjacentes et formées par pliage, la surface oblique est obliquement vers le haut et vers l'extérieur, les première et deuxième surfaces latérales sont pliées dans deux directions de pliage opposées, la deuxième surface latérale est utilisée pour supporter au moins un contenant de plante (40), les mailles sont fournies sur la première surface latérale pour recevoir les crochets de telle sorte que les contenants de support soient en prise de façon horizontale et détachable avec les éléments de support longitudinaux.

2. La structure légère de mur végétal telle que revendiquée dans la revendication 1, où le contenant de support est formé d'une feuille de métal déployé ayant des mailles, la maille du contenant de support a une longueur latérale et une longueur longitudinale, la longueur latérale et/ou la longueur longitudinale étant supérieure à une largeur du crochet de l'élément de support longitudinal.

3. La structure légère de mur végétal telle que revendiquée dans la revendication 1, où l'élément de fixation est mis en oeuvre par une vis.
